# EUROPEAN PATENT APPLICATION

(11) **EP 1 662 174 A1**
(43) Date of publication of application: **31.05.2006**
(21) Application number: 04746484.7
(22) Date of filing: 25.06.2004
(51) Int. Cl.: F16G 5/16

(54) **METALLIC BELT AND PUSH BLOCK USED THEREFOR**

(30) Priority: 26.08.2003 JP 2003300724; 14.10.2003 JP 2003353119; 30.01.2004 JP 2004024680; 05.02.2004 JP 2004029814
(71) Applicant: Fukuju Kogyo Kabushiki Kaisha, Hashima-shi, Gifu 501-6274 (JP)
(72) Inventor: TAKAGI, Shigemasa, c/o FUKUJU KOGYO KABUSHIKI K., Hashima-shi, Gifu 5016274 (JP); TAKAGI, Yutaka, c/o FUKUJU KOGYO KABUSHIKI KAISHA, Hashima-shi, Gifu 5016274 (JP)
(74) Representative: Sherrard-Smith, Hugh
(86) International application number: PCT/JP2004/009015
(87) International publication number: WO 2005/019684

(57) **Abstract**

A single-band type metallic belt wound between annular V-grooves of a drive pulley and a driven pulley is provided. The metallic belt includes a metal endless band having at least one layer, and a plurality of metal push blocks engaged and superimposed on the band in a manner enabling sliding in a longitudinal direction of the band. The push block includes a body formed by bending a single wire material and subsequently performing pressing so as to have two outer side surfaces defining side contact surfaces that are inclined to respectively make frictional contact with two inner surfaces of the annular V-grooves. A pair of pillars respectively extend along extensions of the two contact surfaces of the body and have an outer surface that is continuous with the side contact surfaces of the body. A pair of opposed hooks extend. The outer side surface of the push block that makes frictional contact with the V-grooves include an oil film breaking portion. An opening is defined by the pair of hooks, and a band holding surface is formed on the body in the opening. The band is inserted in the opening of each push block and held on the band holding surface. A metal retainer is arranged on an outer surface of the band in a manner engageable with the pair of hooks to ensure engagement between the band and the push blocks. A ring is attached to the outer surface of the retainer to prevent deformation of the retainer.

## Description

### FIELD OF THE INVENTION

The present invention relates to an endless metallic belt wound between a drive pulley and a driven pulley, and a push block used therefor.

### BACKGROUND ART

A metallic belt is used in, for example, continuously variable transmissions for automobiles or the like and includes at least a monolayer metal band, which is an endless belt, and a plurality of superimposed push blocks engaged with the endless belt in a manner enabling movement along the longitudinal direction of the band. Each push block includes a body, which comes into frictional contact with an inner surface of an annular V-shaped grooves in a drive pulley and driven pulley, and a head, which is arranged on a pillar extending from the middle of the body. A pair of band insertion grooves are provided on the left and right sides of the pillar. Such type of a metallic belt is generally referred to as a two-band belt.

Each push block, which is manufactured by blanking a metal plate, is extremely narrow, with the distance between the pair of band insertion grooves normally less than 2 mm. As the metallic belt moves along the annular V-shaped groove of the pulley, corners of the band insertion grooves in the push block come into contact with the band in a tilted state. Although the corner surface must be chamfer-finished to reduce load that concentrates on the band during this contact, it is almost impossible to find an effective finishing method. As a result, there is a concern that the life of the band may be shortened.

In order to eliminate this concern, the present applicant has already made a number of proposals. For example, Japanese Patent No. 3111186 (Patent Document 1) describes an alternative to blanking a metal plate when manufacturing a push block. A single wire material that is completely devoid of sharp corners, for example, a wire material having a circular cross-section or an oval cross-section, or a square wire material having corners chamfered to be arcuate, is first bent and then pressed to form a push block. This push block includes a body, which has two outer surfaces that are inclined to enable frictional contact with the two inner surfaces of an annular V-shaped groove of a pulley, a pair of pillars, which respectively extend along an extension of the two inclined surfaces of the body, and a pair of hooks, which extend inwardly from the distal end of each pillar toward each other. A band is inserted in the opening formed by the pair of hooks, and the band is held on a band holding surface of the body. This metallic belt is generally referred to as a single band type. To ensure engagement between the band and push block, the metallic belt includes a retainer arranged further outward from the band in a manner enabling engagement with the pair of hooks.

Japanese Laid-Open Patent Publication No. 2002-5241 (Patent No. 3461790) (Patent Document 2) describes a metallic belt in which, in the same manner as Patent Publication 1, bends a single wire material and then presses the bent wire material so as to form a push block so that portions other than the band holding surface have dimensions that are larger than the actual dimensions of the manufactured product. Subsequently, the wire material is trimmed in accordance with a predetermined product shape. This forms an engaging means with an engaging projection and recess on the surface of the body, and the frictional contact surface of the body becomes dimpled.

It can easily be understood that when using a wide band, which can be expected to have higher output, there may be greater unevenness in contact pressure on the arcuate band holding surface in the widthwise direction of the band. (For example, refer to the bottom right column of Japanese Laid-Open Patent Publication No. 58-50139.)

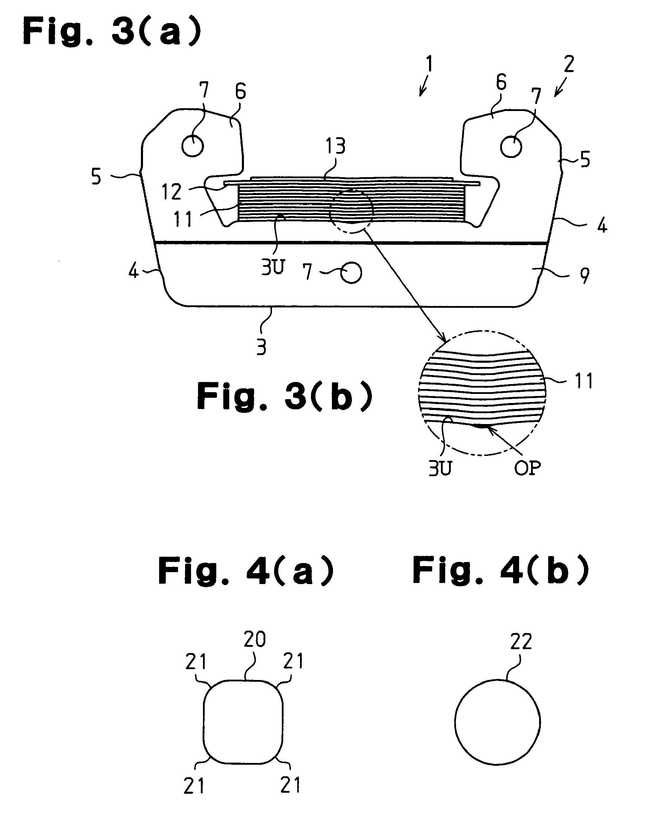

In order to eliminate these problems, Japanese Laid-Open Patent Publication No. 2003-42235 (Patent No. 3559006) (Patent Document 3) describes a metallic belt including a push block substantially similar to those of Patent Documents 1 and 2 and particularly includes a band having two continuous arcuate cross-sections. The band holding surface of the push block is formed to be arcuate in correspondence with the shape of the band. Therefore, the contact pressure of the band on the band holding surface of the push block is uniform. This prevents lateral movement of the band in the width direction at the band holding surface of the push block. In addition, the band is expected to have a longer life since an oil sump is formed between the innermost layer of the band and the band holding surface, as shown in Fig. 3.

According to the results of a vehicle road test using the metallic belt of Patent Document 1, since the push block formed from a single wire block has a smooth arcuate surface that is devoid of sharp angles, much progress has been made with regard to problems arising in conjunction with load concentration because load does not concentrate at portions that are in contact with the band as the metallic belt moves along the annular V-shaped groove of the pulley even when the push block is in an inclined state. However, unexpected problems such as breakage of a retainer have arisen.

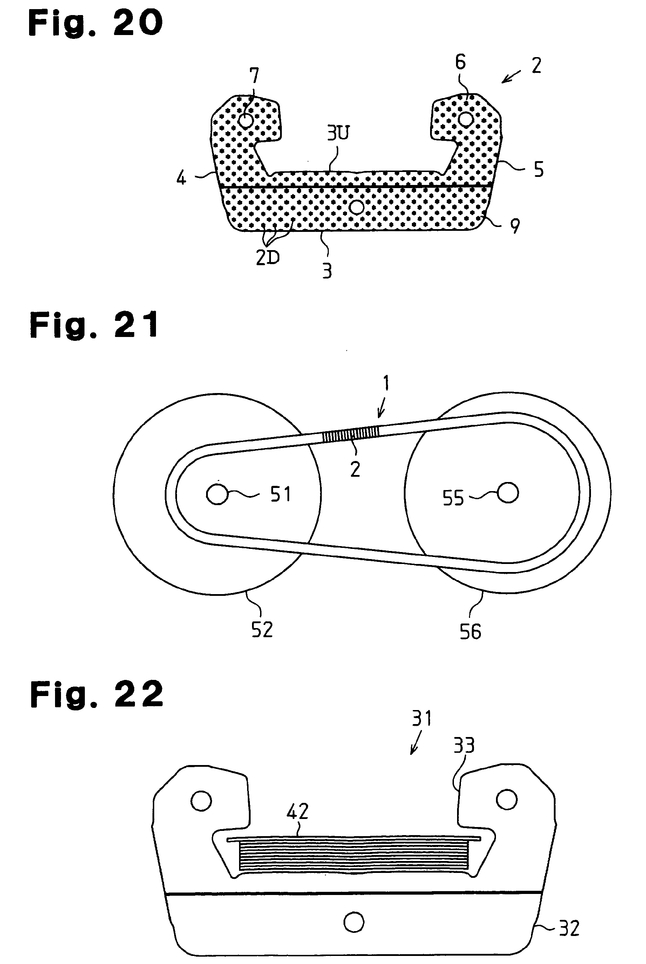

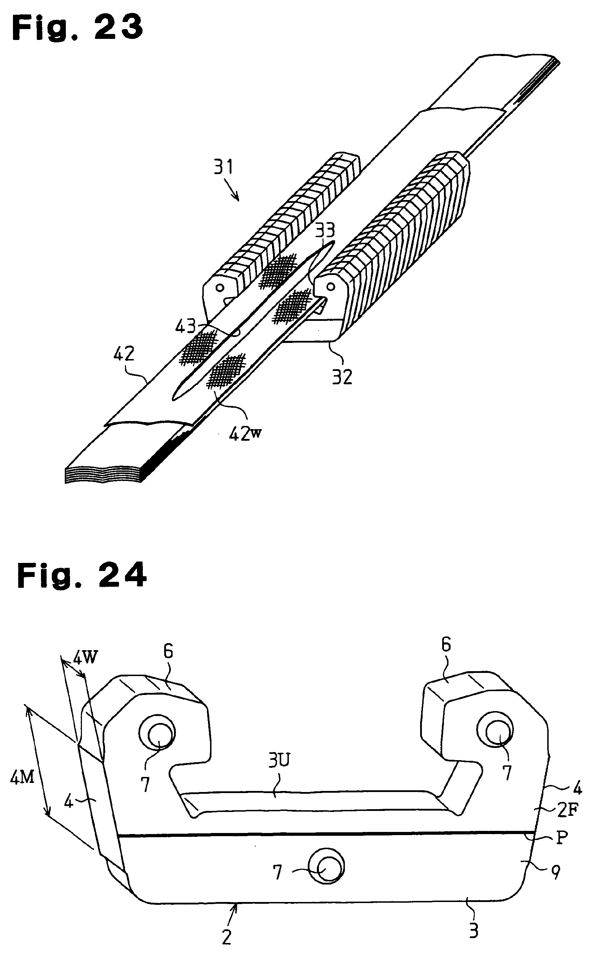

More specifically, referring to Figs. 22 and 23, during assembly of a metallic belt 31, a retainer 42, which is wider than a band insertion opening 33, must pass through the opening 33 of the push block 32. Thus, the retainer 42 must be bent to have an inverted U-shaped cross-section so that the width of the retainer 42 becomes narrower than the opening. An elongated hole 43 is provided in the retainer 42 to facilitate assembly. However, when the metallic belt 31 moves in a straight direction between the pulleys, the retainer 42 behaves so as to slightly move in the vertical directions. This results in the concentration of stress in the vicinity of the elongated hole 43 thereby breaking the retainer 42. The vicinity of the elongated hole 43 of the retainer 42 is defined as a breakage occurrence area 42W.

The flexibility of the retainer is indispensable for the wide retainer to pass through the opening of the push block, which is narrower than the retainer. Further, the formation of the elongated hole must be allowed to enable efficient assembly of the push block with the metallic belt, which is inserted through the retainer. Thus, repeated tests have been conducted to reduce the size of the elongated hole in steps. As a result, it has been concluded that prevention of strength loss of the retainer, which is caused by the elongated hole, cannot be resolved without adding another component. The breakage of the retainer is not only caused by tensile stress applied to the retainer but also caused by the concentration of bending stress repeatedly applied near the elongated hole in the plate thickness-wise direction of the retainer. Accordingly, it has been found that the strength of the retainer could be increased if a ring is attached to suppress the movement of the retainer in the plate thickness-wire direction as a means of preventing retainer strength loss. The present invention has been made based on this discovery.

### DISCLOSURE OF THE INVENTION

Accordingly, an object of the present invention is to ensure the strength of the retainer and to prolong the life of the metallic belt.

Another object is to provide a push block for reducing power transmission loss between pulleys and a metallic belt that uses such a push block.

To achieve the above object, one aspect of the present invention provides a metallic belt wound between annular V-grooves of a drive pulley and a driven pulley. The metallic belt includes a metal endless band having at least one layer, and a plurality of metal push blocks engaged and superimposed on the band in a manner enabling sliding in a longitudinal direction of the band. The push block of the metallic belt including a body formed by bending a single wire material and subsequently performing pressing so as to have two outer side surfaces defining side contact surfaces that are inclined to respectively make frictional contact with two inner surfaces of the annular V-grooves. A pair of pillars respectively extend along extensions of the two contact surfaces of the body and have an outer surface that is continuous with the side contact surfaces of the body. A pair of opposed hooks extend inwardly from distal ends of the pillars. An opening is defined by the pair of hooks. A band holding surface is formed with a cross-sectional shape of a plurality of arcs arranged in parallel on the body in the opening, with the band inserted in the opening of each push block and held on the band holding surface. A metal retainer is arranged on an outer surface of the band in a manner engageable with the pair of hooks to ensure engagement between the band and the push blocks. A ring is attached to the outer surface of the retainer to prevent deformation of the retainer.

It is desirable that the inner circumferential length of the ring be set 0.5 to 1.0 mm longer than the outer circumferential length of the retainer. It is desirable that the width W2 of the ring and the width W of the opening of the push block have a relationship satisfying W2 ≤ W. It is preferable that the ring has a plate thickness of 0.15 to 0.25 mm.

It is desirable that sets for projections and concavities for forcing and ensuring alignment of the push blocks that are adjacent be formed at a total of three locations, two on the hooks and one on the body, with each projection being a truncated cone, and each concavity having a shape similar to the corresponding projection.

It is desirable that a corner located at a front side of the body with respect to the travel direction be formed with an obtuse angle (θ) to reduce power transmission loss with the pulleys.

It is desirable that the outer surface of the pillar be inclined in the same manner as the side contact surface of the body. In another example, it is desirable that the side contact surface of the body include a step (β) for forming a gap with the inner side surfaces of the annular V-grooves of the pulleys on the front side of the push block with respect to the travel direction.

It is desirable that the side contact surface of the body and the side contact surface of the pillar include a plurality of grooves extending parallel to the travel direction of the push block, and the width of the grooves at the front side with respect to the travel direction be wider than the width at the rear side of the grooves in the travel direction.

Another aspect of the present invention provides push blocks for use with a metallic belt wound between annular V-grooves of a drive pulley and a driven pulley. The push blocks are superimposed with one another along the longitudinal direction of the metallic belt. The push block includes a contact surface for making frictional contact with inner side surfaces of the annular V-grooves of both pulleys. The contact surface includes an oil breaking portion for breaking up an oil film formed on the inner side surfaces of the pulleys.

It is desirable that the push block have a front surface located on the front side with respect to the travel direction and a rear surface located on the rear side. The angle formed by the contact surface and the front surface of the push block is an obtuse angle.

It is desirable that the oil breaking portion be formed by a ridge line defined by the contact surface and the rear surface of the push block.

It is desirable that the contact surface includes a front half, intersecting the front surface of the push block at an obtuse angle, and a rear half, intersecting the rear surface of the push block at a right angle. A ridge line functioning as the oil film breaking portion is defined between the front half and the rear half.

It is desirable for the front half of the contact surface to form an obtuse angle with the front surface of the push block, and the rear half of the contact surface to form an obtuse angle with the rear surface of the push block. The ridge line functioning as the oil film breaking portion extends along the entire length of the contact surface at a middle part of the contact surface in the widthwise direction.

It is desirable for a step to extend along the entire length of the contact surface on a front portion of the contact surface. The step defines the ridge line functioning an the oil film breaking portion.

It is desirable for a front portion of the contact surface to form an obtuse angle with the front surface of the push block, and a groove to extend along the entire length of the contact surface at the middle of the contact surface. An inner wall of the groove and the contact surface defines the ridge line that functions as the oil film breaking portion. It is desirable for the groove to have a rectangular cross-section. The groove may have a triangular cross-section.

It is desirable for the contact surface of the push block including the oil film breaking portion for breaking an oil film to have a plurality of grooves extending parallel to the travel direction of the push block.

A further aspect of the present invention that can be expected to have higher output and longer life provides a metallic belt including an endless metal band and a plurality of push blocks engaged with the metal band in a relatively movable manner and wound between a drive pulley and a driven pulley so as to enable continuously variable transmission of rotation speed of the driven pulley. The metal band of the metallic belt including a plurality of thin plate-shaped rings having cross-sections of a plurality of continuous arcs, the rings being superimposed to form the metal band. An outer surface of the metal band is divided into two without using flexibility to form an endless non-processed first retainer for engaging the metal band and the push block and an endless non-processed second retainer for preventing deformation caused by vibration in the superimposing direction of the metal band. The first and second retainers have an arcuate cross-sectional shape similar to the cross-sectional shape of the metal band. The push block includes a body having two outer side surfaces defining side contact surfaces that are inclined to respectively make frictional contact with the pulleys, pillars respectively extending along extensions of the two contact surfaces of the body, a pair of opposed hooks formed on distal ends of the pillars, an opening for insertion of the metal band, and a band holding surface defined on an upper surface of the body and shaped to have a cross-sectional shape that is substantially similar to the cross-sectional shape of the band.

It is desirable for the push block to be made of a metal wire material. The band holding surface of the push block has a cross-sectional shape of a plurality of continuous arcs that is similar to the cross-sectional shape of the band, and the band holding surface has a radius of curvature that is greater than the radii of curvature of the arcs of the band.

### BRIEF DESCRIPTION OF THE DRAWINGS

Fig. 1 is a cross-sectional view of a metallic belt according to a first embodiment;
Fig. 2 is a perspective view showing the metallic belt;
Fig. 3(a) is a cross-sectional view of the metallic belt, and Fig. 3(b) is a partial enlarged view showing an oil sump;
Fig. 4(a) is a cross-sectional view of a wire material used to form the push block, and Fig. 4(b) is a cross-sectional view of another wire material;
Fig. 5 is a front view showing the condition for forming the push block;
Fig. 6 is a side view showing the push block;
Figs. 7(a), 7(b), and 7(c) are diagrams showing the relationship between three sets of engagement projections and recesses;
Fig. 8(a) is a diagram showing the relationship between an engagement projection and a recess in the prior art;
Fig. 9 is a side view showing the thickness of each part of the push block;
Fig. 10 is a schematic diagram showing a moving state the push block, particularly, between pulleys;
Fig. 11(a) is a cross-sectional view of the metallic belt and a movable pulley, and Fig. 11(b) is a partially enlarged cross-sectional view of the movable pulley;
Fig. 12(a) is a plan view showing the push block, and
Fig. 12(b) is a partially enlarged plan view showing the shapes of an inclined friction surface and a pillar of the push block;
Fig. 13 is a partially enlarged plan view showing the shapes of an inclined friction surface and a pillar of another push block;
Fig. 14(a) is a perspective view showing the push block, Fig. 14(b) is a plan view showing a recess groove of the pillar and the inclined friction surface, Fig. 14(c) is a partially enlarged cross-sectional view of the recess groove of the push block, and Fig. 14(d) is a partially enlarged cross-sectional side view of a recess groove in another push block;
Fig. 15 is a graph showing the relationship between load torque and slip ratio of the push block;
Figs. 16(a) and 16(b) are enlarged views showing the recess groove of the pillar and the inclined friction surface in the push block;
Fig. 17 is a front view showing the assembly of the metallic belt;
Fig. 18 is a plan view showing the assembly of the metallic belt;
Fig. 19 is a side view showing the assembly of the metallic belt;
Fig. 20 is a front view showing the irregularities of the push block when produced by sandblasting;
Fig. 21 is a side view of the transmission gear;
Fig. 22 is a cross-sectional view of a conventional metallic belt;
Fig. 23 is a perspective view showing a metallic belt in the prior art;
Fig. 24 is a perspective view showing a push block according to a second embodiment;
Fig. 25(a) is a partial plan view showing a push block of this embodiment, and Figs. 25(b), 25(c), 25(d), 25(e), and 25(f) are partial plan views each showing modifications of the push block;
Fig. 26a) is a diagram showing a recess groove of the push block of Fig. 25(b), and Fig. 26(b) is a diagram showing the recess groove of the push block of Fig. 25(d);
Fig. 27(a) is an explanatory diagram showing the operation of the push block in the second embodiment, and
Fig. 27(b) is an explanatory diagram showing the operation of a push block in the prior art;
Fig. 28(a) is a cross-sectional view of a metallic belt according to a third embodiment, and Fig. 28(b) is a cross-sectional view showing a modification in the cross-sectional shape of the retainer and ring;
Fig. 29(a) is a front view showing a forming state of the push block, and Fig. 29(b) is a side view showing the push block;
Fig. 30(a) is a perspective view showing the metallic belt, and Fig. 30(b) is an explanatory diagram showing the assembly of the metallic belt;
Fig. 31(a) is a plan view showing a state in which the push block is assembled to the metal band, and Fig. 31(b) is a side view showing the same; and
Fig. 32(a) is a perspective view showing a metallic belt having a retainer with a shape differing from that of the retainer of Fig. 30(a), and Fig. 32(b) is an explanatory diagram showing the assembly of the same metallic belt.

### BEST MODE FOR CARRYING OUT THE INVENTION

A first embodiment of the present invention applied to a continuously variable transmission of an automobile is described in detail hereinafter with reference to the drawings.

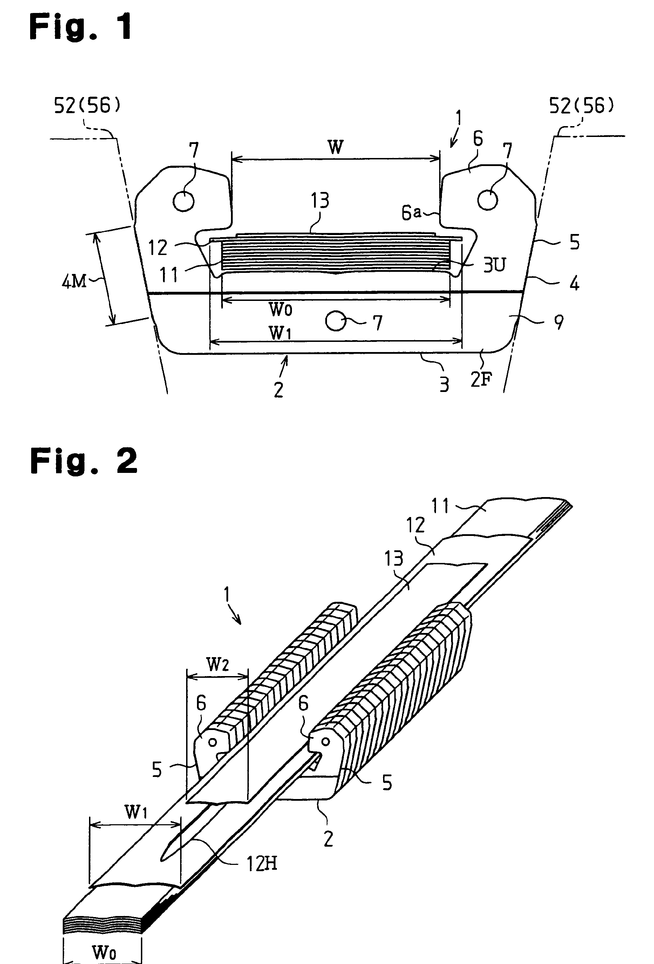

As shown in Fig. 1, a metallic belt 1 of the present invention includes a plurality of push blocks 2, a plurality of bands 11, a retainer 12, and a ring 13 for suppressing deformation of the retainer 12. The push block 2 is manufactured from a single wire material 20 having a square cross-sectional shape with corners 21 chamfered to be arcuate, as shown in Fig. 4(a). A wire material 22, such as that shown in Fig. 4(b), may also be used in place of the wire material 20.

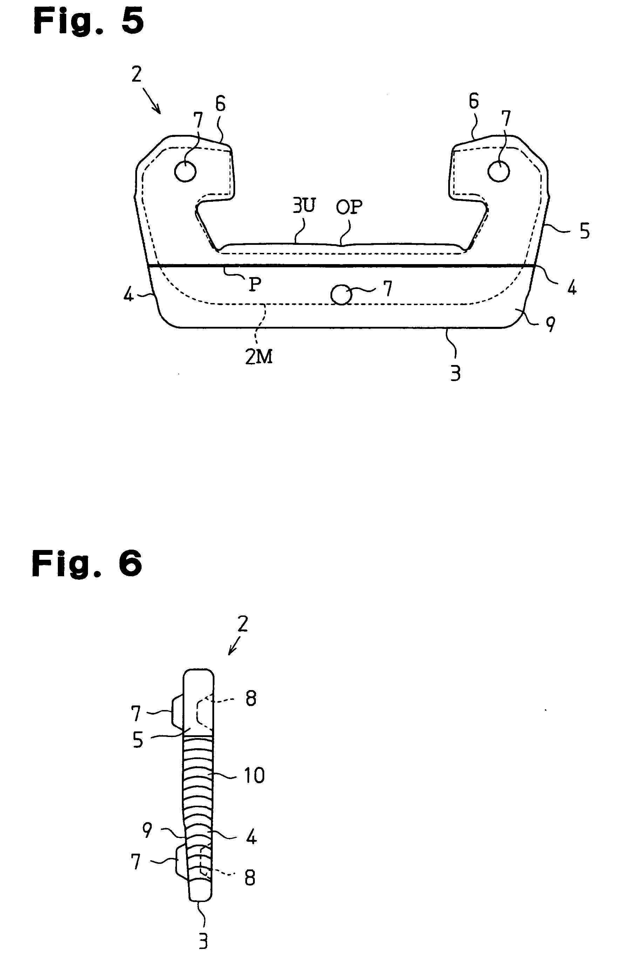

When manufacturing the push block, the wire material 20 is first cut to a desired length, and bent. A bent product 2M is indicated by the broken lines shown in Fig. 5. The bent product 2M is then pressed to form the push block 2 indicated by the solid lines shown in Fig. 5. The push block 2 includes a body 3, a pair of pillars 5, and a pair of hooks 6. The body 3 includes two outer side surfaces defining two side contact surfaces, which are inclined to enable desirable frictional contact with the two inner side surfaces of an annular V-groove of a driven pulley and drive pulley shown in Fig. 1, and a band holding surface 3U, which holds the bands 11. The pair of pillars 5 extend from the body 3 toward a top opening along the extension of each contact surface 4 of the body 3. Accordingly, the outer side surfaces of the pillars 5 are continuous and flush with the side contact surfaces of the body 3. Therefore, in the following description, the term side contact surfaces 4 of the body 3 refers to both of the outer side surfaces of the pillar 5 and side contact surfaces 4 of the body 3. The pair of hooks 6 are arranged opposite one another and extend inwardly from the distal end of the pillars 5. The band holding surface 3U has a cross-section including two continuous arcs and an oil sump OP in a middle portion, as shown in Figs. 1, 3(a), and 5.

As shown in Figs. 5 and 6, a pitch line P (also referred to as a locking edge) extending in the lateral direction is defined on the front surface 2F of the push block 2, and an inclined surface 9 is defined at the lower side of the pitch line P. The inclined surface 9 is tiltable such that adjacent push blocks are strongly pressed against one another when the push blocks 2 starts moving along an arcuate path as they approach the annular V-groove of one of the pulleys from a state in which the push block 2 is moving straight along a linear path between the two pulleys.

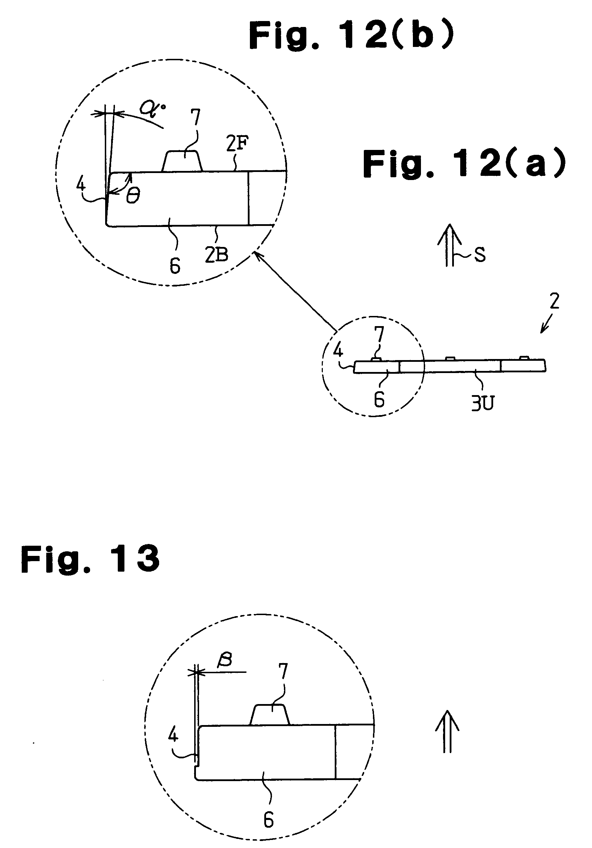

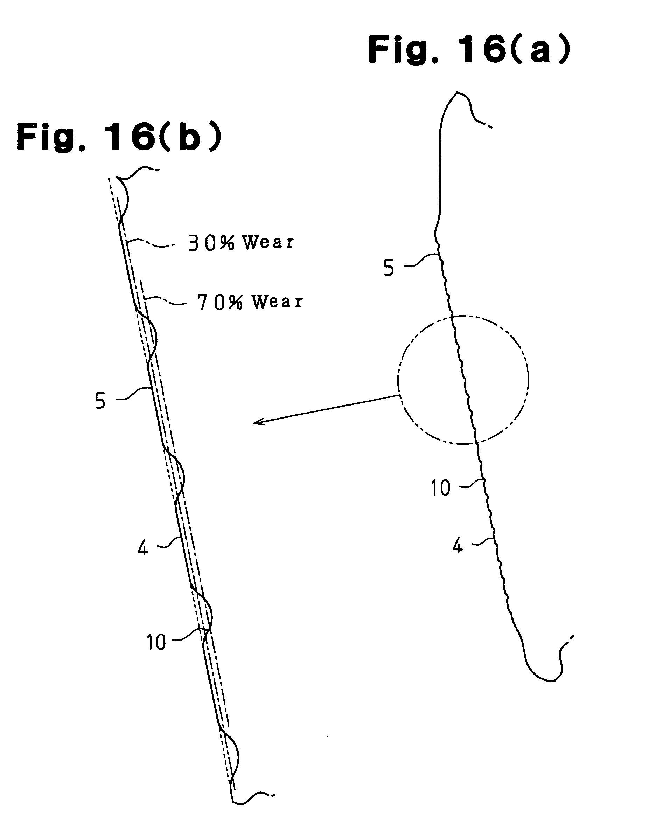

As shown in Figs. 12(a) and 12(b), during pressing, a relief of angle α° is formed at an acute angle at the side contact surface 4 of the body 3 relative to the travel direction S of the push block 2, such that the side contact surface 4 is inclined relative to the travel direction, and the corner located at the front side of the body 3 in the travel direction has an obtuse angle θ. Alternatively, a step β may also be provided on the side contact surface of the body 3, as shown in Fig. 13 in an effective manner. The step β forms a gap between the inner side wall surface of the annular V-groove of the pulleys 52 and 56 at the front side of the push block 2 in the travel direction. As shown in Figs. 16(a) and 16(b), notches 10 having an arcuate cross-section are pressed into the side contact surface 4 of the body 3 to complete the push block 2, as shown in Figs. 16(a) and 16(b).

In the front surface 2F of the push block 2, projections 7 project toward the front side of the push block 2 in the travel direction, and concavities 8 are provided on the opposite rear surface at a total of three locations, including one in each of the left and right hooks 6 and one on the inclined surface 9. The number of projections and concavities is not limited to three locations.

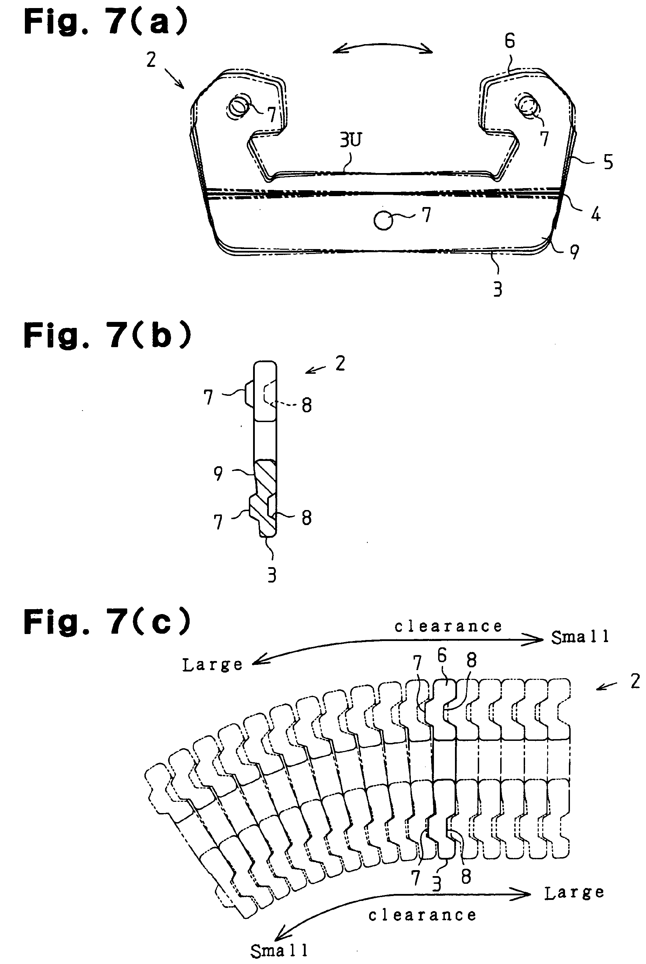

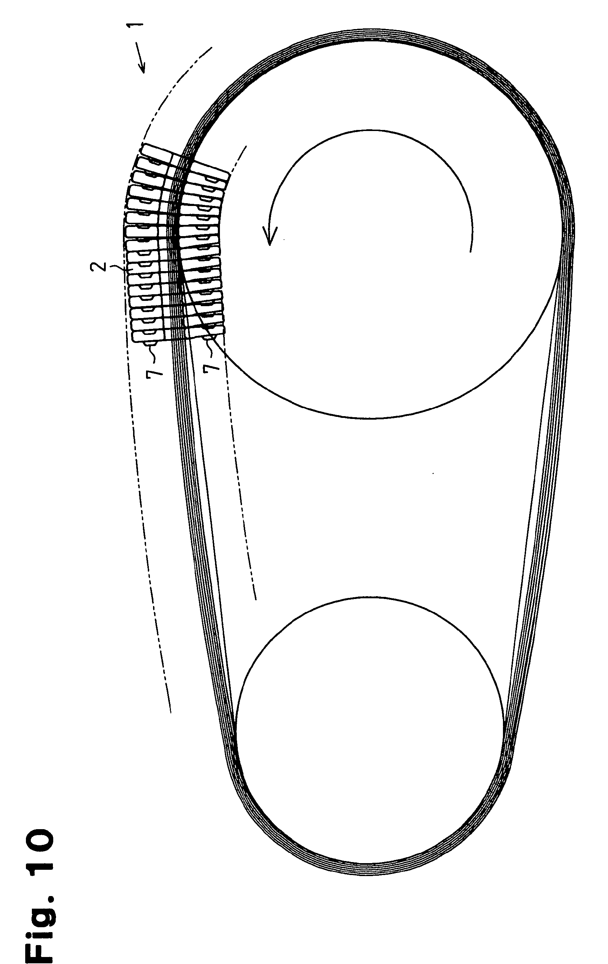

Regarding the three projections 7 and concavities 8, referring to Figs. 7(a) 7(b), 7(c) and Fig. 10, when the push blocks 2 move along the linear path, the projections 7 on the hooks 6 of a certain push block 2 engages the concavities 8 in the hooks 6 of the push block 2 adjacent in the front side with respect to the travel direction, and the projections 7 on the hooks 6 of the push block 2 adjacent in the rear side with respect to the travel direction engages the concavities 8 in the hooks 6 of the certain push block 2 between the pulleys 52 and 56 (refer to Fig. 21). This prevents vibrations and twisting of each push block 2 and controls the behavior of the push blocks 2. When moving around the pulleys, the projections 7 and concavities 8 on the inclined surface 9 respectively engage the concavities 8 and projections 7 of the adjacent push block 2 to aid behavior control of adjacent push blocks.

As shown in Fig. 7(c), when moving around the pulleys, the clearance between the projections 7 and concavities 8 located at the inner side of a circular path and the clearance between the projections 7 and concavities 8 located at the outer side of the circular path vary in a reversed manner.

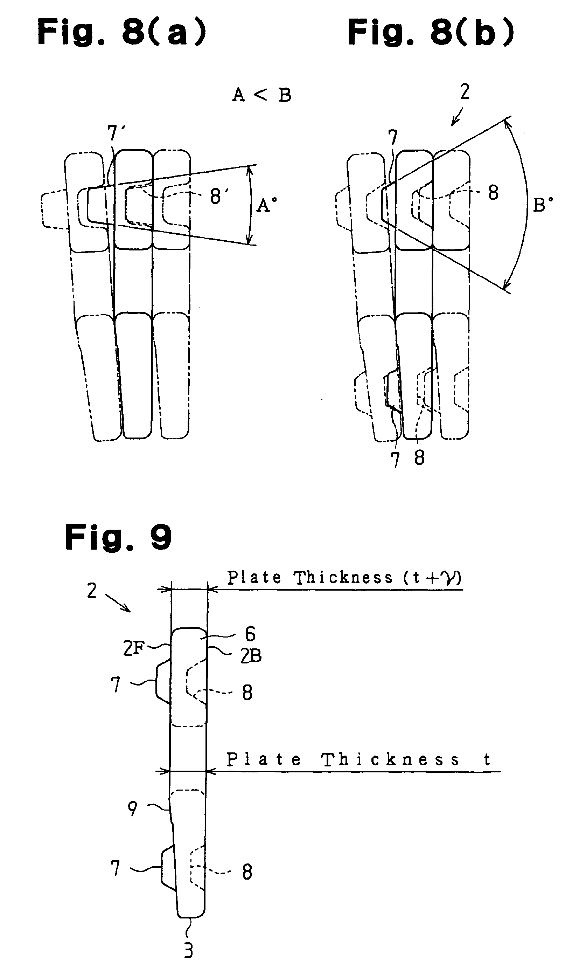

Push blocks of the prior art are provided with projections 7 and concavities 8 only on the hooks 6, as shown in Fig. 8. In this case, a projection 7' and a concavity 8' have relatively large shapes and dimensions in consideration of the engagement that occurs when moving around the pulleys. For example, although the projection 7 of the present embodiment and the conventional projection 7' of the prior art both have the shape of a truncated cone, a widening angle B of the projection 7 of the present embodiment is set to be larger than the widening angle A of the projection 7' in the prior art. Therefore, the outer diameter of the bases of the three projections 7 in the present embodiment is larger than that of the projection in the prior art, and the height is lower than that of the projection prior art. Thus, improved strength may be expected at this portion.

As shown in Figs. 9 and 10, the front side of the push block 2 with respect to the travel direction, that is, the front surface 2F, is not parallel to the rear surface 2B, and the top end of the hook 6 is formed with a thickness that is relatively thicker by a thickness γ than the thickness t at the starting point of the inclined surface 9 of the push block 2. The thickness at the top end of the hook 6 relative to the thickness t of the starting point of the inclined surface 9 of the push block 2 is t+y, and the thickness at the bottom end of the body 3 is approximately t/2. Accordingly, when the metallic belt 1 is moving, the push blocks 2 are normally inclined forward, and as a result the travel track of the metallic belt 1. It is known that this controls the moving path of the metallic belt 1 to be convex, as shown in Fig. 10.

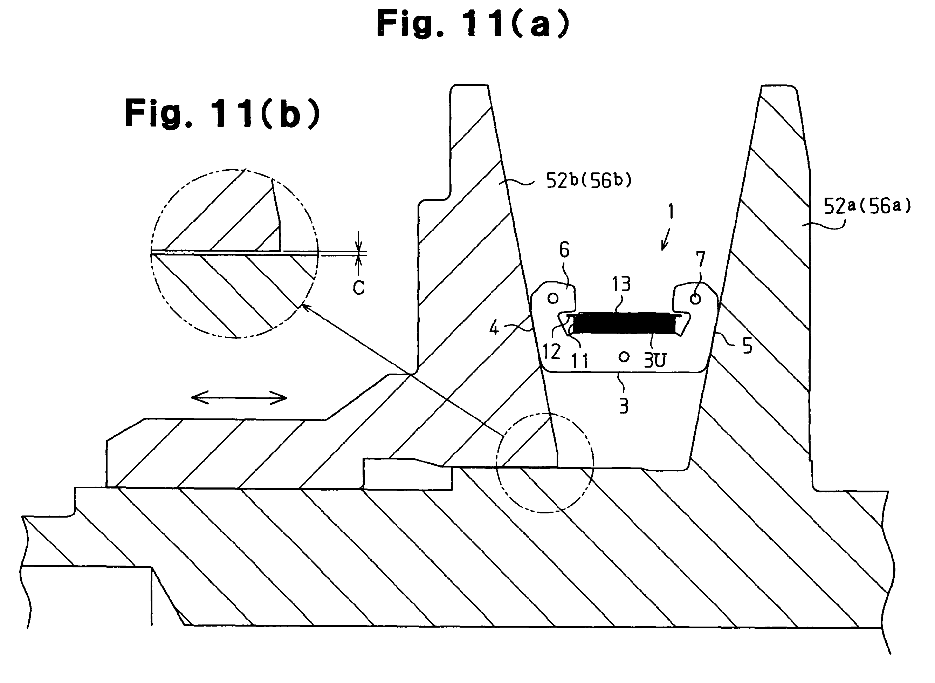

The side contact surface 4 of the body 3 is described below based on Figs. 11 to 13. In a continuously variable transmission, the pulleys 52 and 56 each have an annular V-groove. The push blocks 2 of the metallic belt 1, which are in frictional contact with the inner side surfaces of the V-groove, are moved in the radial direction of the pulleys 52 and 56 so that continuously variable transmission is performed by the two pulleys 52 and 56.

The pulleys 52 and 56 include fixed pulley pieces 52a and 56a that are fixed relative to the axial direction, and movable pulley pieces 52b and 56b that are movable relative to the axial direction. The width of the V-groove increases and decreases by the movement of the movable pulley pieces 52b and 56b in the axial direction. As shown in Fig. 11, the movable pulley pieces 52b and 56b contact and move in a reciprocating manner relative to the fixed pulley pieces 52a and 56ae. Thus, a slight clearance C is provided between the movable pulley pieces 52b and 56b and the fixed pulley pieces 52a and 56a. Rotation is performed in this state.

The band 11 that travels straight between the two pulleys 52 and 56 cannot actually travel along a strictly linear path. Therefore, impacts are produced between the pulleys 52 and 56 and the front surface 2F of the push block 2 at the initial point of inflection where the push block 2 enters the pulley circular path from the linear path. To mitigate the shock of the impact, the side contact surface 4 is inclined at angle α°, such that the front corner of the side contact surface 4 of the body 3 forms an obtuse angle θ, as shown in Figs. 12(a) and (b).

The side contact surface 4 is inclined at an angle α° relative to a direction extending at a right angle from a plane (front surface relative to the travel direction) perpendicular to the travel direction of the push block 2. Accordingly, the distance between the left and right side contact surfaces 4 is set such that the side closer to the rear surface 2B is greater than the side closer to the front surface 2F.

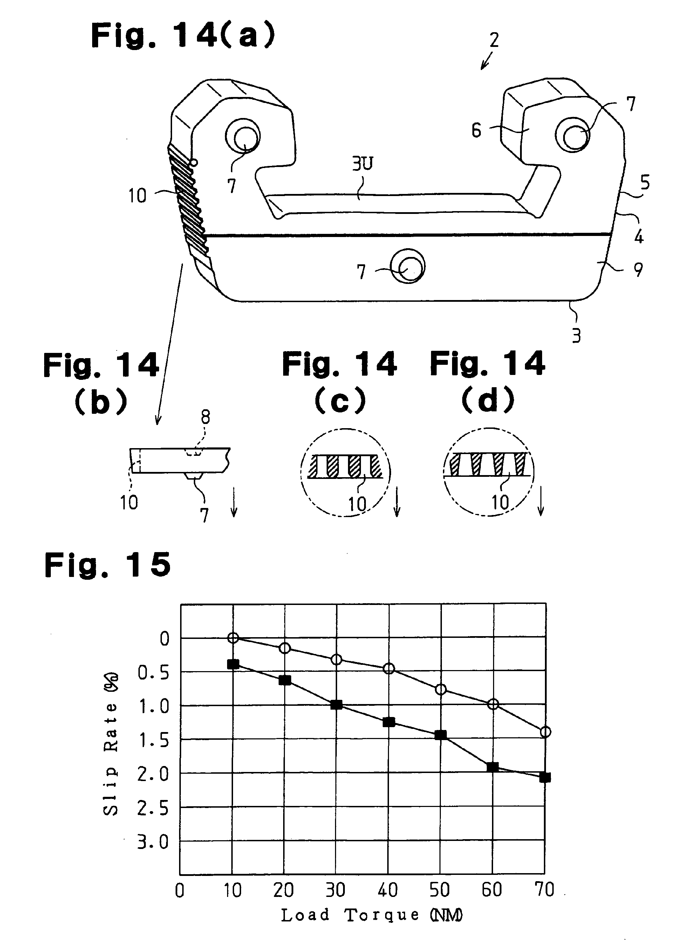

A plurality of spaced notches 10 are formed in the side contact surface 4 of the body 3, as shown in Figs. 14(a) through 14(d), and Figs. 16(a) and (b). If the inner wall surfaces of the pulleys 52 and 56, that is, the conical surfaces and the side contact surface 4 of the body 3 were both flat, a film of oil may form and cause slippage. This would reduce the transmission efficiency and excessive wear may occur. To prevent this, the two contact surfaces may both be roughened. For example, Japanese Laid-Open Patent Publication No. 11-210849 and Japanese Patent No. 3209323 describes this.

To cope with this problem, the present embodiment includes the notches 10 in the side contact surface 4 of the body 3. As shown in Figs. 14(a) through (d), the width of the notch 10 at the front side relative to the travel direction is set to be wider than the width at the rear side. The width of the notch 10 is 100 to 150 µm, the thickness is approximately 35 µm, and the pitch is approximately 300 µm. The notch 10 in a modification shown in Fig. 14(c) has a trumpet-shaped cross-section, and the notch 10 of the modification shown in Fig. 14(d) has an inverted trapezoidal cross-section.

As shown in Figs. 16(a) and (b), when the ridge between two adjacent notches 10 has been worn out by 30% to 70%, the contact percentage of the contact surface 4 relative to the pulley is 65% to 80%. Providing dimples 2D by methods such as shot-peening, sandblasting or the like, as shown in Fig. 20, are effective for reducing wear and friction heat at portions other than the side contact surfaces 4 of the body 3.

As shown in Figs. 1 and 2, an opening 6a is formed between the pair of hooks 6 to allow the insertion of the layers of bands 11. The bands 11 inserted in the opening 6a are held on the band holding surface 3U at the top end of the body 3. In this state, since the engagement of the bands 11 and the push blocks 2 cannot be ensured because the width W of the opening 6a is only slightly narrower than the width Wo of the band 11, a retainer 12 is arranged on the outer side of the outermost band 11 to ensure engagement of the bands 11 and the push blocks 2. A ring 13 is then arranged on the outer side of the retainer 12 to complete the metallic belt 1. The relationship between the width W1 of the retainer 12 and the width W of the opening 6a is expressed as W1 > W. The relationship between the width W2 of the ring 13 and the width W of the opening 6a is expressed as W2 ≤ W.

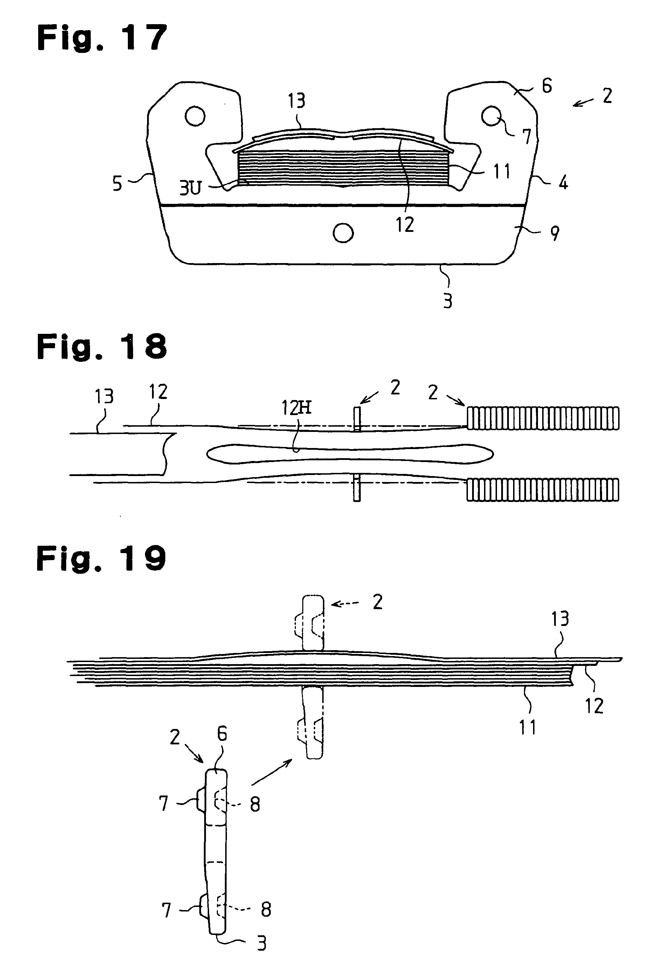

The assembly procedures of the metallic belt 1 will now be described. An elongated hole 12H extends through the retainer 12, as shown in Fig. 2. Referring to Fig. 17, when the ring 13 is fitted to the outer side of the retainer 12, the retainer 12 is bent by a jig (not shown) such that the width W1 of the retainer 12 becomes smaller than the width W of the opening 6a. In this state, the push blocks 2 are pushed upward from the lower side of the band 11, as shown in Fig. 19, such that the retainer 12 and the ring 13 pass through. Then, the push block 2 is moved in the lateral direction of Fig. 18 to a position at which the width of the retainer 12 returns to the normal width W1. The metallic belt 1 is completed by repeating this operation.

It is desirable for the inner circumferential length of the ring 13 to be slightly longer, approximately 0.5 to 1.0 mm, than the outer circumferential length of the retainer 12 and that the plate thickness of the ring 13 is approximately 0.15 to 0.25 mm to allow bending of the retainer 12, as shown in Fig. 17.

The actual condition under which the metallic belt 1 is used is known as shown in Fig. 21, in which the metallic belt 1 is wound between the annular V-groove formed by the pulley pieces 52a and 52b of the drive pulley, with the annular V-groove formed by the pulley pieces 56a and 56b of the driven pulley. The metallic belt 1, when in frictional contact with the annular V-groove of the drive pulley 52, is displaced in the radial direction of the pulley due to change in the distance between the pulley pieces 52a and 52b of the drive pulley 52. This enables continuously variable transmission.

The relationship between the load torque and slip rate of the present metallic belt 1 and the metallic belt of the prior art is shown in Fig. 15. In Fig. 15, the metallic belt 1 of the present invention is indicated by the white circles, and the conventional metallic belt is indicated by the black squares. It is apparent that the former has superior torque transmission efficiency relative to the latter.

The metallic belt of the present embodiment has the advantages described below.
1. The push block 2 is formed by bending and pressing a single wire material 20. Thus, certain types of impact can be absorbed with minimal friction loss relative to the compression stress on the annular V-groove by setting the rolling direction of the wire material 20 to be generally parallel to the side contact surface 4. That is, in a push block of the prior art formed by pressing a plate, the cold drawing direction of the plate generally extends perpendicular (parallel to the rotational axis of the pulley) to the side contact surface 4, as suggested in Patent Publication No. 2,563,817. The metal atoms in the plate material are known to be arranged in the cold drawing direction, and in the push blocks of the prior art, the metal atoms are arranged is a direction generally perpendicular to the side contact surface. This situation is unavoidable during formation as is made clear by the above-mentioned patent. In contrast, since the push block 2 is formed by bending and subsequently pressing a wire material 20 in the present embodiment, the metal atoms, which are arranged in the longitudinal direction during the manufacturing process of the wire material 20, are maintained in the same arrayed state after the formation process. Thus, the metal atoms are arranged to be generally parallel to the side contact surface of the side contact surface 4. The atom array enables impact absorption. It is generally known through tension and bending tests that there is a strength difference of several percent in the rolling direction and the direction perpendicular to the rolling direction of a steel plate material that has been cold rolled, as determined.
2. Since the push block 2 is formed by bending and pressing a wire material 20 that is completely devoid of sharp corners, there is no generation of concentrated bending stress between the band 11 and the band holding surface 3U even when the push block 2 is inclined as the metallic belt 1 moves around the annular V-groove. This drastically prolongs the life of the band 11.
3. Since the ring 13, which permits bending of the retainer 12, is used to assemble the metallic belt 1, the metallic belt 1 can easily be assembled with efficiency.
4. There is no damage in the vicinity of the elongated hole of the retainer 12 because vertical movement along the plate thickness-wise direction of the retainer 12 is prevented by the employment of the ring 13.
5. The accuracy of travel in an aligned state is increased by improving the shape and dimensions of the three projections 7 and concavities 8. Particularly, marked effectiveness in alignment is obtained when the push blocks 2 are sent to and sent out of the pulleys 52 and 56 on the loose side, that is, the feed side the push block 2.
6. The side contact surface 4 of the body 3 of the push block 2 forms an acute angle α relative to the travel direction of the push block 2, and the corner of the body 3 positioned on the side of the travel direction forms an obtuse angle θ. Thus, the impact when the push block 2 enters the annular V-groove from a straight path between the pulleys 52 and 56 is mitigated since the distance between left and right side contact surfaces 4 of the body 3 of the push block 2 at the front side surface with respect to the travel direction is less than that of the rear surface. Furthermore, when the side contact surface 4 of the body 3 is provided with a step β and a corner with an obtuse angle θ, an oil film on the circumference of the pulleys 52 and 56 is effectively broken down at the step β and the ridge line of the corner of the obtuse angle θ. This improves the torque transmission efficiency when the oil film is broken down.
7. The notches 10 are formed on the side contact surface 4 of the body 3. Thus, the front surface side of the notch 10 in the travel direction is wide and the rear surface side is narrow. This drastically improves the cooling efficiency and reduces friction loss.

A second embodiment of the present invention will now be described centering on parts that differ from the first embodiment with reference to the drawings.

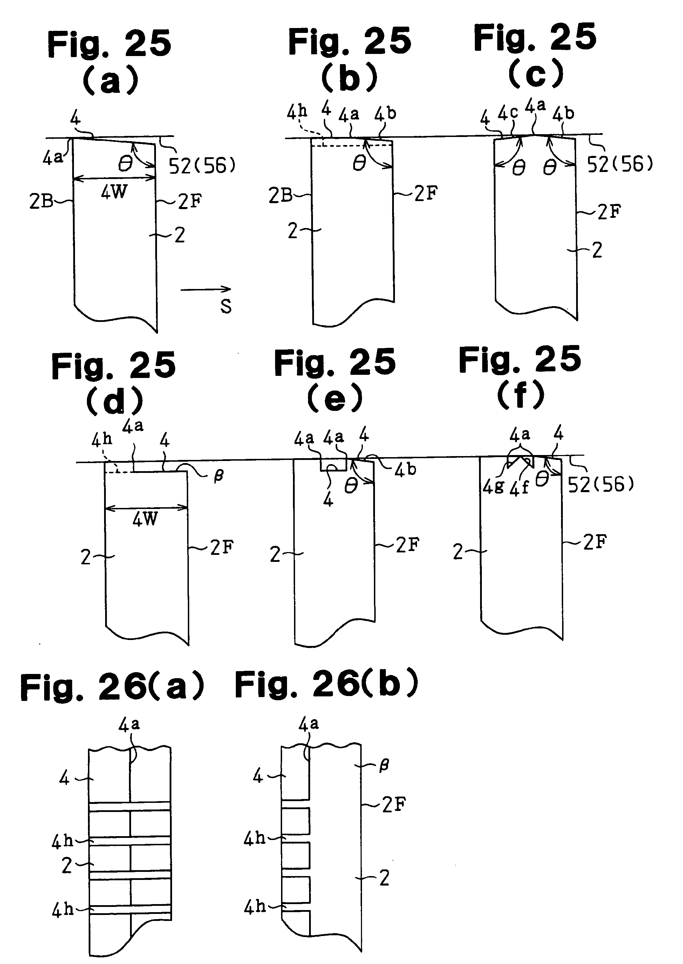

As shown in Fig. 24, in the same manner as the push block of the first embodiment, the push block 2 of the present embodiment includes a side contact surface 4 for the pulleys. The width of the side contact surface 4 is indicated by 4W, and the length is represented by 4M. As shown in Fig. 25(a), the side contact surface 4 of the push block 2 forms an obtuse angle θ relative to the front surface 2F of the push block 2 positioned on the front side in the travel direction S. The side contact surface 4 of the push block 2 forms an acute angle relative to the rear surface 2B, and the ridge line 4a formed by the side contact surface 4 and the rear surface 2B extends along the length 4M of the side contact surface 4. The ridge line 4a engages the inner side surface of the annular V-groove of the pulleys 52 and 56, breaking down the oil film present on the surface of the pulleys 52 and 56. This maximizes direct contact of the push block 2 with the pulleys 52 and 56. Therefore, the ridge line 4a functions as an oil film breaking portion.

In a first modification of the push block 2 shown in Figs. 25(b) and 26(b), the front half 4b of the side contact surface 4 forms an obtuse angle θ relative to the front surface 2F of the push block. The rear half of the side contact surface 4 is formed so as to intersect perpendicular to the rear surface 2B of the push block 2. The ridge line 4a used to break up the oil film is formed between the front half and rear half of the side contact surfaces 4. The ridge line 4a extends along the entire length of the side contact surface 4 at the center of the side contact surface 4 in the widthwise direction. The ridge line 4a of the first modification also has the same function as the ridge line 4a of the push block 2 shown in Fig. 25(a). In the push block 2 of the first modification, a plurality of grooves 4h are formed in the side contact surface 4 and extend parallel to the travel direction S. The grooves 4h discharge the residue of the oil film broken up by the ridge line 4a from the push block 2.

In the push block 2 of a second modification shown in Fig. 25(c), the front half 4b of the side contact surface 4 forms and obtuse angle θ relative to the front surface 2F of the push block 2, and the rear half 4b of the side contact surface 4 forms an obtuse angle θ relative to the rear surface 2B of the push block 2. Accordingly, the ridge line 4a, for breaking up the oil film, extends along the entire length of the side contact surface 4 at the center of the side contact surface 4 in the widthwise direction. The ridge line 4a of the second modification has a function similar to the ridge line 4a of the push block 2 of the second embodiment.

In the push block 2 of a third modification shown in Figs. 25(d) and 26(b), a step β extending along the entire length of the side contact surface 4 is provided at the front of the side contact surface 4. The ridge line 4a formed by the step β is located rearward from the center of the width 4W of the side contact surface 4. The oil film is broken up by the ridge line 4a. In the push block 2 of a third modification shown in Fig. 26(b), a plurality of grooves 4h extending parallel to the travel direction are formed in the side contact surface 4, and the front end of each recess groove 4 is connected to the step β. The residue of the oil film is discharged from the grooves 4 outside the push block 2.

In the push block 2 of a fourth modification shown in Fig. 25(e), the front half 4b of the side contact surface 4 forms and obtuse angle θ relative to the front surface 2F of the push block. A groove 4e having a rectangular cross-section and extending along the entire length of the side contact surface 4 is formed in the center of the side contact surface 4. Two parallel ridge lines 4a are formed by the side contact surface 4 and the two interior walls of the groove 4e. The oil film is broken up by the two ridge lines 4a.

In the push block 2 of a fifth modification shown in Fig. 25(f), two parallel grooves 4f and 4g having triangular cross-sections extend along the entire length of the side contact surface 4 and are formed in the center of the side contact surface 4. Three ridge lines 4a are formed by the side contact surface 4 and the two grooves 4f and 4g. That is, a ridge line 4a on the front side is formed by the side contact surface 4 and the front inner wall of the front groove 4f, a center ridge line 4a is formed by the side contact surface and the front inner wall of the groove 4g and the rear inner wall of the front groove 4f, and a rear ridge line 4a is formed by the side contact surface 4 and the rear inner wall of the rear groove 4g. Accordingly, an oil film is broken up by the three ridge lines 4a of this modification.

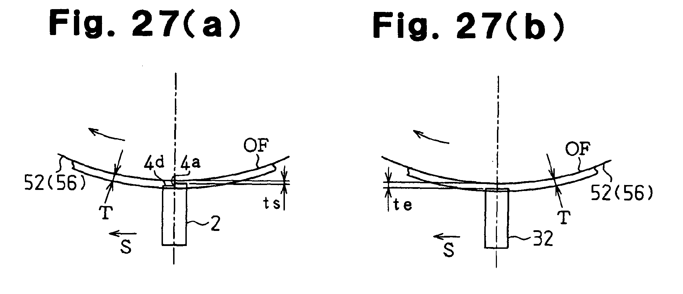

The phenomenon of breaking up the oil film with the ridge line 4a of the push block 2 will now be discussed with reference to Figs. 27(a) and 27(b). Fig. 27(a) shows the relationship between an oil film and the push block 2 of the third modification shown in Fig. 25(d), and Fig. 27(b) shows the relationship between an oil film and a prior art push block 32. To facilitate understanding of how the push block 2 functions, the inner surface of the annular V-grooves in the pulleys 52 and 56 are schematically shown as arcs in Figs. 27(a) and 27(b).

In the prior art structure shown in Fig. 27(b), when the pulleys 52 and 56 and the push block 2 apply a clamping pressure to an oil film OF (film thickness T) on the inner surface of the pulleys 52 and 56, the left and right side contact surfaces of the push block 32 are in contact with the surface of the oil film OF. Therefore, it can be predicted that a residual oil film OF having a predetermined thickness te remains between the push block 32 and the pulleys 52 and 56 as a static pressure bearing. More specifically, the inner surface of the annular V-groove of the pulleys 52 and 56 is a conical surface, and the side contact surface of the push block 32 is a flat surface. Thus, contact between the push block and the pulleys 52 and 56 should be a linear contact. However, due to the oil film OF that is actually present between the push block 32 and the pulleys 52 and 56, the surface of the push block 32 contacts the surface of the pulleys by way of the oil film OF. It is thus presumed that the oil film OF having thickness te remains due to the balance between the clamping pressure created by the push block and pulleys.

In the example of a push block 2 shown in Fig. 27(a), the ridge line 4a functions to break up the oil film OF, reduce the thickness T of the oil film OF to a tolerable thickness ts, and the tolerable thickness ts becomes as close as possible to zero, such that nearly 100% of the clamping pressure acting on the push block 2 from the pulleys 52 and 56 is transmitted as forward drive torque to the push block 2. This enables effective power transmission. Regarding torque transmission efficiency, data comparing a prior art example and a metallic belt using the push block 2 shown in Fig. 27(a) is described below with reference to Fig. 15.

The structure for achieving efficient power transmission is a simple structure that does not increase the number of components and is realized by simply machining the side contact surfaces 4 on the two sides of the push block 2 to form steps and the like. Since the ridge line 4a for breaking up the oil film OF is formed along the entire length of the side contact surfaces 4, there is no premature wear, and superior durability is obtained.

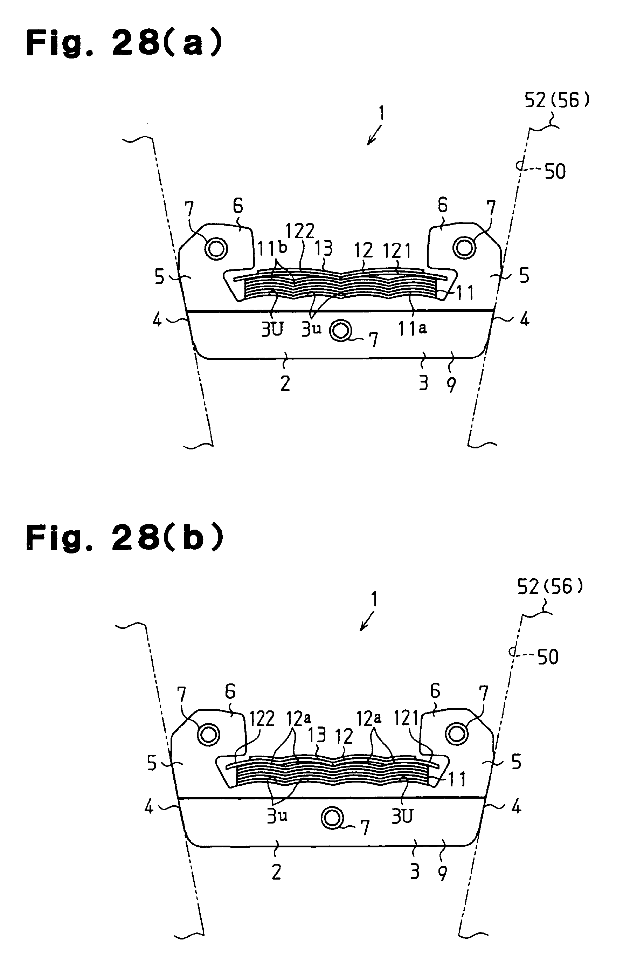

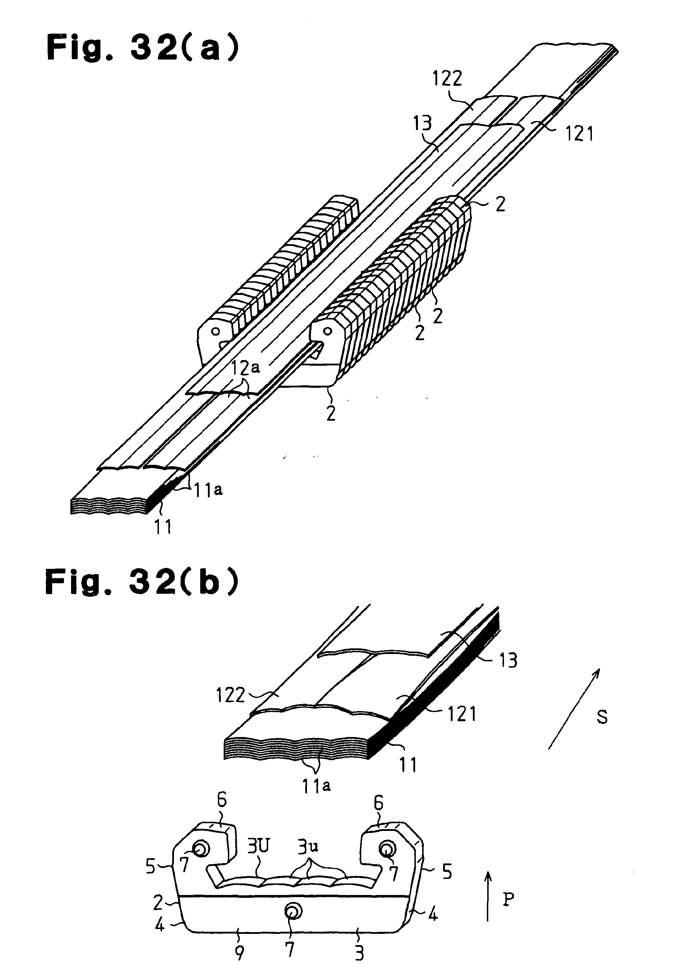

A third embodiment of the present invention will now be described with reference to Figs. 28(a) and 28(b) to Figs. 32(a) and 32(b) centering on parts differing from the first embodiment.

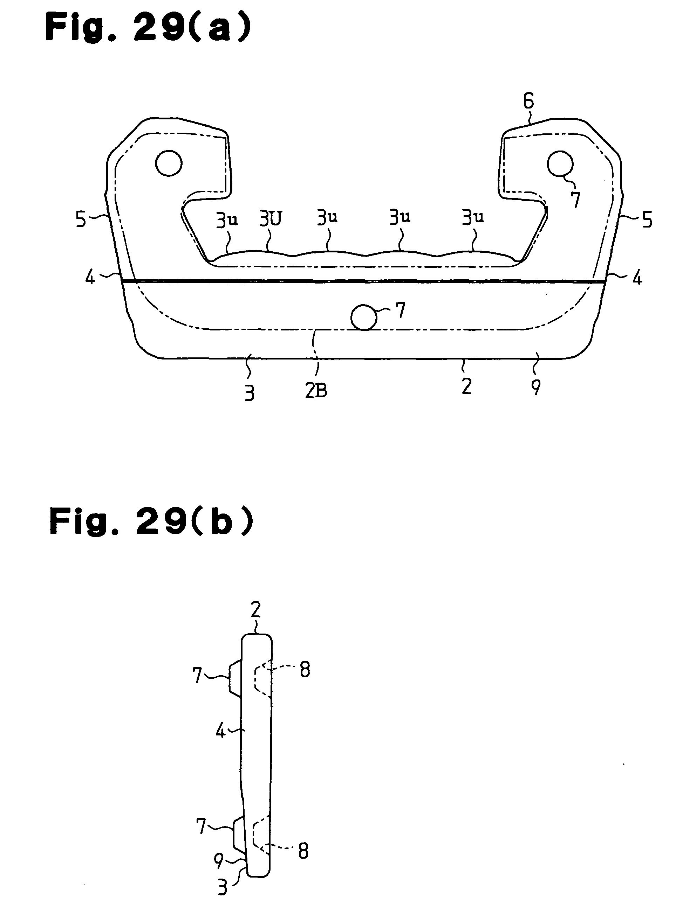

Although the push block 2 of the present embodiment has a structure similar to the push block of the first embodiment, only the differences in structure are described below. As shown in Figs. 28(a) and 28(b) and Figs. 29(a) and 29(b), four continuous arcuate portions 3u are formed on the band holding surface 3U of the body 3 of the push block 2. The number of the arcuate portions 3u is not limited to four, insofar as the number is a plurality. The arcuate portions 3u extend along the widthwise direction of the push block 2, and are defined by arcs having different centers. The arcuate portions 3u are continuous in an undulated manner.

A first retainer 12 is endless and formed from a non-processed material that does not have a through hole. A ring 13 functioning as a second retainer has a width differing from the first retainer 12 but is similar to the first retainer 12 in that it is endless and formed from a non-processed material that does not have a through hole.

A metal band 11 is formed by a plurality of endless thin-plate rings 11a, and a plurality of arcuate portions 11b are continuously formed along the widthwise direction on the rings 11a in correspondence with the arcuate portions 3u of the push block 2. The arcuate portions 11b of the ring 11a are set so as to have a larger radius of curvature than the arcuate portions 3u of the push block 2.

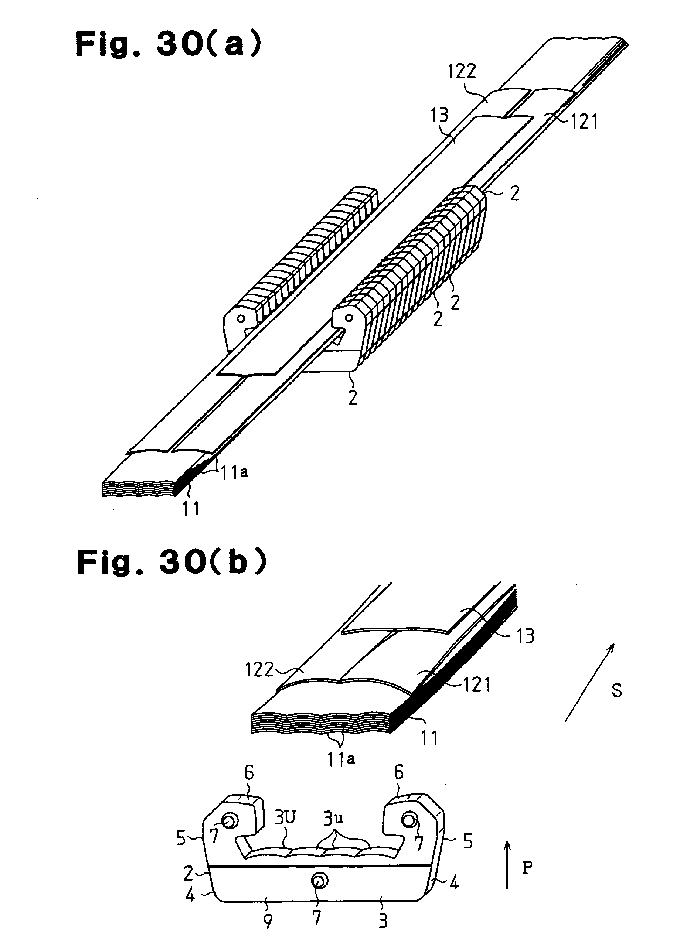

As shown in Figs. 28(a) and (b), Figs. 30(a) and (b), and Figs. 32(a) and (b), the first retainer 12 includes two retainer pieces 121 and 122 that are adjacent in the widthwise direction. The retainer pieces 121 and 122 shown in Fig. 28(a) and Figs. 30(a) and (b), have a single peak in the center, and their entirety forms an arcuate cross-section. The retainer pieces 121 and 122 of another example shown in Fig. 28(b) and Figs. 32(a) and (b) each have arcuate portions 12a including two continuous arcs. The first retainer 12 has a retainer piece of which entire width that is greater than the width of the opening between the hooks 6 of the push block 2. The opening is used for the insertion of the metal band 11.

As shown in Figs. 30(a) and 30(b), and Figs. 32(a) and 32(b), the ring 13 is superimposed on the outer surface of the first retainer 12 so as to extend across the retainer pieces 121 and 122. This suppresses vibrations and deformation in the superimposing direction of the metal band 11 and the two retainer pieces 121 and 122. As shown in Figs. 28(a) and 28(b), the ring 13 has a cross-sectional shape identical to that of the first retainer 12. Therefore, the first retainer 12 and the ring 13 have a cross-section similar to that of the metal band 11.

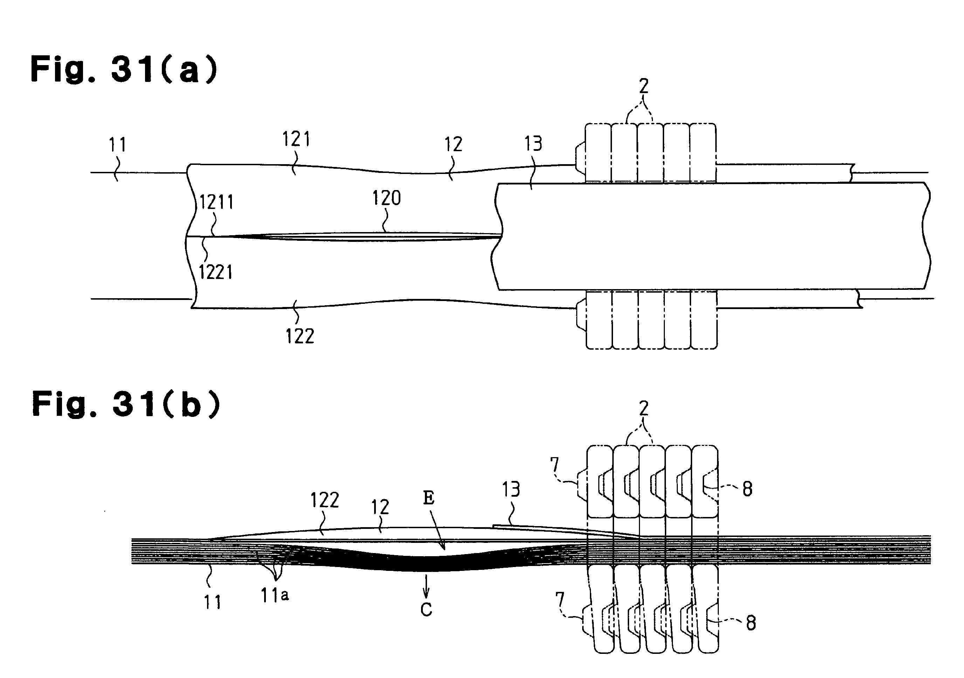

The method for assembling the metal band 11 and push block 2 will now be described. First, as shown in Figs. 31(a) and (b), the metal band 11, which is formed by a predetermined number of rings 11a, is pulled down and deformed in the C direction to provide a gap E between the metal band 11 and the first retainer 12. Then, opposing side edges 1211 and 1221 of the retainer pieces 121 and 122 are lifted at the middle portion as shown by reference number 120 as if a person holds his or hand together like in a prayer, and the retainer pieces 121 and 122 are elastically deformed using the gap E until the width of the first retainer 12 is compressed until its width becomes about the same as the metal band 11.

A plurality of push blocks 2 are pushed upward in the arrow P direction from the inner side of the metal band 11, as shown in Fig. 30(b) and Fig. 32(b), so as to be inserted in the metal band 11. The retainer pieces 121 and 122, the ring 13, and the push block 2 is slid in the arrow S direction to a position adjacent to the side edges 1211 and 1221. The metal band 11 is completed by repeating these operations.

In this embodiment, the two retainer pieces 121 and 122 are deformed in a hands-in-prayer manner to reduce the width of the first retainer 12 and assemble the push block 2 to the metal band 11. Therefore, there is no need to provide a through hole in the first retainer 12. Further, since the method of reducing the first retainer width and assembling the push block 2 to the metal band 11 is used, there is no concern of the retainer 12 cracking at the origin point of the through hole.

Since the metal band 11 has a cross-sectional shape of a plurality of continuous arcs, the amount of deformation of the metal band 11 is limited. This minimizes the amplitude of the vibration of the metal band 11 arising from the impact of the metal band 11 and the push block 2 at the inflection point where the pulley circular path changes to the inter-pulley linear path. Particularly since a non-processed ring that does not have a through hole may be used as the first retainer 12, which functions to engage with the push block 2, there is no concern for cracking occurring in the first retainer 12, as previously described.

Since a metal wire material is used as the material of the push block 2 in the present embodiment, the push block 2 has a smooth exterior surface. Therefore, concentration of stress at the contact point between the metal band 11 and the push block 2 is suppressed, and the metal band 11 has a prolonged life.

The cross-sectional shape of the band holding surface 3U of the push block 2 has a shape that is optimal for the cross-sectional shape of the metal band 11, that is, a cross-sectional shape of a plurality of continuous arcs. Further, if the radii of curvature of the arcs of the installation surface 3U are greater than the radii of curvature of the arcs of the metal band 11, the metal band 11 and push block 2 have similar shapes and correspond with one another at the plurality of continuous arc parts. Since the radii of curvature of the arc shapes of the push block 2 is greater than the radii of curvature of the arc shapes of the metal band 11, a crescent-shaped gap is formed between adjacent arcs along the superimposing direction of the push block 2 and metal band 11. This holds lubricating oil in the gap. Thus, it is easy to supply lubricating oil between the push block 2 and the metal band 11 near the inflection point where the pulley circular path changes to the inter-pulley linear path.

The present invention is not limited to the above embodiments, and may also be realized as described below.

A steel plate may be used in place of the metal wire material to fabricate the push block 2 of the third embodiment. Since the push blocks actually used presently in the world are made of 100% steel, when using steel plates, there should be no resistance to the handling and such push block would become popular faster.

The ring forming the second retainer in the present embodiment may be omitted, and one type of retainer may be used for both the first and second retainers.

## Claims

1. A single-band type metallic belt wound between annular V-grooves of a drive pulley and a driven pulley, the metallic belt including a metal endless band having at least one layer, and a plurality of metal push blocks engaged and superimposed on the band in a manner enabling sliding in a longitudinal direction of the band, the metallic band being **characterized by**:
the push block including a body formed by bending a single wire material and subsequently performing pressing so as to have two outer side surfaces defining side contact surfaces that are inclined to respectively make frictional contact with two inner surfaces of the annular V-grooves, a pair of pillars respectively extending along extensions of the two contact surfaces of the body and having an outer surface that is continuous with the side contact surfaces of the body, and a pair of opposed hooks extending inwardly from distal ends of the pillars;
wherein an opening is defined by the pair of hooks, and a band holding surface is formed with a cross-sectional shape of a plurality of arcs arranged in parallel on the body in the opening, with the band inserted in the opening of each push block and held on the band holding surface;
a metal retainer arranged on an outer surface of the band in a manner engageable with the pair of hooks to ensure engagement between the band and the push blocks; and
a ring attached to the outer surface of the retainer to prevent deformation of the retainer.

2. The metallic belt according to claim 1, **characterized in that** the inner circumferential length of the ring is set to be 0.5 to 1.0 mm longer than the outer circumferential length of the retainer.

3. The metallic belt according to claims 1 or 2, **characterized in that** the width W2 of the ring and the width W of the opening of the push block have a relationship satisfying W2 ≤ W.

4. The metallic belt according to any one of claims 1 through 3, **characterized in that** the ring has a plate thickness of 0.15 to 0.25 mm.

5. The metallic belt according to any one of claims 1 through 4, **characterized in that** sets of projections and concavities for forcing and ensuring alignment of the push blocks that are adjacent are formed at a total of three locations, two on the hooks and one on the body, with each projection being a truncated cone, and each concavity having a shape similar to the corresponding projection.

6. The metallic belt according to any one of claims 1 through 5, **characterized in that** the side contact surface of the body and the side contact surface of the pillar continuous with the body side contact surface are inclined relative to travel direction of the push block, and a corner located at a front side of the body with respect to the travel direction is formed with an obtuse angle.

7. The metallic belt according to any one of claims 1 through 5, **characterized in that** the side contact surface of the body and the side contact surface of the pillar continuous with the body side contact surface include a step (β) for forming a gap with the inner side surfaces of the annular V-grooves of the pulleys on the front side of the push block with respect to the travel direction.

8. The metallic belt according to any one of claims 1 through 6, **characterized in that** the side contact surface of the body and the side contact surface of the pillar include a plurality of grooves extending parallel to the travel direction of the push block, and the width of the grooves at the front side with respect to the travel direction is wider than the width at the rear side of the grooves in the travel direction.

9. Push blocks for use with a metallic belt wound between annular V-grooves of a drive pulley and a driven pulley, the push blocks being superimposed with one another along the longitudinal direction of the metallic belt, the metallic belt push block being **characterized by**:
a contact surface for making frictional contact with inner side surfaces of the annular V-grooves of both pulleys, the contact surface including an oil breaking portion for breaking up an oil film formed on the inner side surfaces of the pulleys.

10. The metallic belt push block according to claim 9, **characterized in that** the push block has a front surface located on the front side with respect to travel direction and a rear surface located on the rear side, wherein the angle formed by the contact surface and the front surface of the push block is an obtuse angle.

11. The metallic belt push block according to claim 9 or 10, **characterized in that** the oil breaking portion is formed by a ridge line defined by the contact surface and the rear surface of the push block.

12. The metallic belt push block according to claim 9, **characterized in that** the contact surface includes a front half, intersecting the front surface of the push block at an obtuse angle, and a rear half, intersecting the rear surface of the push block at a right angle, wherein a ridge line functioning as the oil film breaking portion is defined between the front half and the rear half.

13. The metallic belt push block according to claim 9, **characterized in that** the front half of the contact surface forms an obtuse angle with the front surface of the push block, and the rear half of the contact surface forms an obtuse angle with the rear surface of the push block, wherein the ridge line functioning as the oil film breaking portion extends along the entire length of the contact surface at a middle part of the contact surface in the widthwise direction.

14. The metallic belt push block according to claim 9, **characterized in that** a step extending along the entire length of the contact surface on a front portion of the contact surface, wherein the step defines the ridge line functioning as the oil film breaking portion.

15. The metallic belt push block according to claim 9, **characterized in that** a front portion of the contact surface forms an obtuse angle with the front surface of the push block, and a groove extends along the entire length of the contact surface at the middle of the contact surface, wherein an inner wall of the groove and the contact surface defines the ridge line that functions as the oil film breaking portion.

16. The metallic belt push block according to claim 15, **characterized in that** the groove has a rectangular cross-section.

17. The metallic belt push block according to claim 15, **characterized in that** the groove has a triangular cross-section.

18. The push block according to any one of claims 9 through 17, **characterized in that** the side contact surface of the body of the push block in frictional contact with the inner side surfaces of the annular V-grooves of both of the pulleys and the side contact surface of the pillar continuous with the body side contact surface includes a plurality of grooves extending parallel to the travel direction of the push block.

19. A metallic belt comprising a metal band and the push block according to any one of claims 9 through 18 including an oil film breaking portion formed on the side contact surface of the body of the push block and the side contact surface of the pillar contacting the side contact surface of the body.

20. A metallic belt including an endless metal band and a plurality of push blocks engaged with the metal band in a relatively movable manner and wound between a drive pulley and a driven pulley so as to enable continuously variable transmission of rotation speed of the driven pulley, the metallic belt comprising:
a plurality of thin plate-shaped rings having cross-sections of a plurality of continuous arcs, the rings being superimposed to form the metal band;
an endless non-processed first retainer, arranged on an outer surface of the metal band, for engaging the metal band and the push block;
an endless non-processed second retainer, arranged on an outer surface of the first retainer, for preventing deformation caused by vibration in the superimposing direction of the metal band; and
wherein the first and second retainers have an arcuate cross-sectional shape similar to the cross-sectional shape of the metal band; and
wherein the push block includes a body having two outer side surfaces defining side contact surfaces that are inclined to respectively make frictional contact with the pulleys, pillars respectively extending along extensions of the two contact surfaces of the body, a pair of opposed hooks formed on distal ends of the pillars, an opening for insertion of the metal band, and a band holding surface defined on an upper surface of the body and shaped to have a cross-sectional shape that is substantially similar to the cross-sectional shape of the band.

21. A metallic band metal band used for the metallic belt according to claim 20.

22. A metallic belt push block used for the metallic belt according to claim 20.

23. A metallic belt push block according to claim 20, wherein the push block is made of a metal wire material.

24. The metallic belt push block according to claim 20, wherein the push block is made of a steel plate.

25. The metallic belt push block according to claim 20, wherein the band holding surface of the push block has a cross-sectional shape of a plurality of continuous arcs that is similar to the cross-sectional shape of the band, and the band holding surface has a radius of curvature that is greater than the radii of curvature of the arcs of the band.

26. The metallic belt according to claim 20, wherein the first and second retainers have the same cross-sectional shape and the same function.
